# FASCICULE DE BREVET EUROPEEN

(11) **EP 1 744 641 B1**
(45) Date de publication et mention de la délivrance du brevet: **07.10.2009**
(21) Numéro de dépôt: 05753736.7
(22) Date de dépôt: 08.04.2005
(51) Int. Cl.: A41D 31/00, A62B 17/00, B29C 61/02

(54) **VESTE ANTI "EFFET CHEMINEE"**
GEGEN DEN KAMINEFFEKT AUSGERÜSTETE JACKE
ANTI-CHIMNEY-EFFECT JACKET

(30) Priorité: 29.04.2004 FR 0404581
(43) Date de publication de la demande: 24.01.2007
(73) Titulaire: KERMEL, 68000 Colmar (FR)
(72) Inventeur: THIRIOT, Laurent, F-68280 ANDOLSHEIM (FR)
(74) Mandataire: Hennion, Jean-Claude
(86) Numéro de dépôt international: PCT/FR2005/000868
(87) Numéro de publication internationale: WO 2005/115186

(56) Documents cités:
- FR-A- 2 831 771
- US-A- 2 709 667
- US-A- 3 639 917

## Description

La présente invention se rapporte de manière générale aux vêtements de protection contre la chaleur et le feu, notamment aux vêtements portés par les sapeurs-pompiers. De manière spécifique, elle concerne une veste de protection équipée d'une bande rétractable sous l'effet de la chaleur.

Les vêtements de protection contre la chaleur et le feu doivent remplir un certain nombre de critères, notamment de : ,
- protection contre la chaleur radiante et contre la chaleur convective,
- bonne stabilité thermique des matériaux constitutifs,
- ininflammabilité et
- bonne imperméabilité.

A ce jour, pour réaliser des vestes d'intervention, on utilise des structures multicouches qui, de manière générale, se composent de quatre couches, à savoir :
- un tissu externe ;
- une membrane imper-respirante, en général associée à un substrat ;
- une barrière thermique;
- une doublure de finition.

La structure multicouches peut également être constituée de trois couches, la membrane imper-respirante étant laminée directement derrière le tissu externe :
- un tissu externe laminé ;
- une barrière thermique;
- une doublure de finition.

La couche interne faisant service de barrière thermique est composée généralement d'un feutre aiguilleté susceptible d'emprisonner de l'air. L'isolation thermique résultant de l'air ainsi emprisonné confère une protection importante contre les flux de chaleur.

La tenue d'intervention de pompier est généralement constitué d'un surpantalon et d'une veste de protection. Plus rarement, il se présente sous forme d'une combinaison intégrale mais, dans ce cas, le confort est diminué du fait du manque d'ouvertures dans le vêtement.

Il a été constaté que la tenue d'intervention des sapeurs-pompiers comportant une veste présente un risque particulier. Sous l'effet de l'exposition aux flammes, un phénomène de convection de chaleur a lieu, qui consiste en une montée de l'air chaud et des flammes sous la veste ou entre les couches de la veste, si la doublure n'est pas solidaire du tissu extérieur. Il en résulte de graves brûlures sur le dos et même jusqu'à la nuque du porteur du vêtement. Cet effet de convection de chaleur est connu également dans d'autres applications thermiques, notamment la ventilation des bâtiments, sous le nom d' « effet cheminée ». Dans le cas des vêtements de protection contre la chaleur et le feu , cet effet a pu être mis en évidence par le demandeur grâce aux tests sur mannequin thermique.

Le port, par dessus la veste de protection, d'un ceinturon d'intervention serré permet de supprimer, à tout le moins, de réduire de manière importante, les zones de passage d'air pouvant donner naissance à cet effet cheminée.

Le ceinturon d'intervention fait partie intégrante de la tenue des sapeurs-pompiers. En France, son port a été rendu obligatoire par l'arrêté du 6 mai 2000 fixant les tenues des sapeurs-pompiers. Le ceinturon est utilisé par les pompiers tant comme support d'équipement (porte-gants, porte-lampe) que pour s'amarrer sur une échelle pivotante automatique ou semi-automatique.

Il est à noter qu'en pratique, le ceinturon ne doit pas être trop serré afin de permettre la circulation d'un certain le flux d'air dans la veste. En effet, l'air emprisonné dans la veste de protection, au niveau de la couche interne faisant office de barrière thermique, participe à la protection du personnel. Un ceinturon trop serré empêche la circulation naturelle de l'air sous la veste et à l'intérieur de la veste et a comme effet de diminuer, d'une part, la qualité de protection de la veste d'intervention, et d'autre part le confort au porter de ladite veste, du fait de ce manque de ventilation. L'habitude est donc de fermer le ceinturon autour de la taille, de manière lâche, pour permettre cette circulation d'air.

De ce fait, lors d'une intervention sur feu des sapeurs-pompiers, il existe un risque potentiel que l'effet cheminée se produise, sans qu'une solution adéquate ait été trouvée à ce problème.

La présente invention a pour objet de remédier à cet inconvénient, en proposant une veste de protection notamment pour sapeurs-pompiers qui permet la circulation d'air sous et dans la veste en temps normal et qui évite l'effet cheminée en cas d'intervention sur feu.

Ainsi, l'invention concerne une veste de protection contre la chaleur et le feu caractérisée par une bande thermorétractable à une température donnée T et qui est agencée en sorte d'obtenir le serrage de la veste autour du corps de son porteur du fait de la rétraction de la bande à la dite température T.

Par « bande » on entend ici un élément allongé qui peut consister soit en une pièce rapportée sur ou intégrée dans la veste soit en une enduction appliquée sur la veste.

Ladite bande rétractable sous l'effet de la chaleur peut notamment se présenter sous la forme d'un ruban de tissu, positionné de préférence du côté intérieur de ladite veste, par exemple sur la face intérieure de ladite veste. Elle peut être intégrée dans le matériau constituant la doublure de finition sous forme de groupements de fils, par exemple fils de trame. Ladite bande peut se présenter également sous la forme d'une bande de matériau rétractable enduite du côté intérieur de la veste de protection.

Par « côté intérieur » de la veste de protection on entend ici son côté orienté vers la peau ; par « face intérieure » de la veste de protection on entend ici l'envers de ce vêtement.

La bande rétractable est positionnée de préférence au niveau de la partie de la veste couvrant les hanches, c'est à dire au niveau où le diamètre du corps est le plus grand et donc où la veste est la plus proche du corps.

Lors d'une intervention au feu, lorsque la température environnant le porteur atteint le seuil déterminé pour la température T où la rétraction de la bande thermorétractable intervient, le flux d'air à une telle température voulant pénétrer sous la veste va provoquer cette rétraction et donc le serrage du vêtement autour du corps, ce qui empêche le passage de cet air chaud et évite le phénomène de convection de la chaleur vers le haut du vêtement, conformément à l'effet cheminée.

La bande thermorétractable est réalisée de préférence en un matériau ininflammable. Elle doit également présenter une bonne résistance mécanique à la chaleur, afin de garder une bonne intégrité même à très haute température et pouvoir remplir sa fonction première qui est de maintenir la veste de protection serrée contre le corps du porteur pendant son intervention sur feu.

Il a été trouvé que, pour correspondre aux besoins de l'invention, une bande destinée à équiper notamment une veste de protection doit présenter un retrait d'au moins 15% à une température d'au moins 250°C.

Selon un deuxième aspect, l'invention concerne une bande destinée notamment à équiper une veste de protection contre la chaleur et le feu, **caractérisée en ce qu**'elle présente un retrait sous l'effet de la chaleur d'au moins 15% à une température d'au moins 250°C.

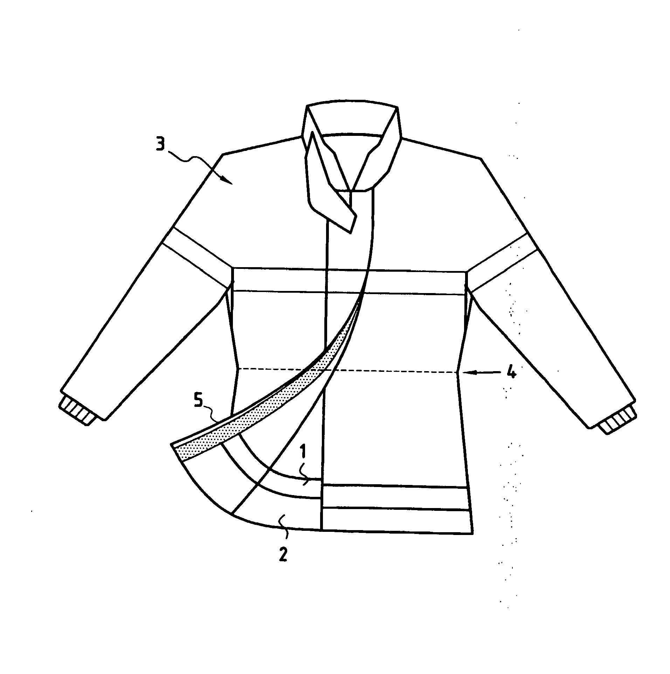

L'invention et les avantages qu'elle procure seront mieux compris à la lumière de la figure unique, qui représente, de façon schématique, une veste de protection ouverte vue de devant présentant une bande rétractable selon une variante de réalisation de l'invention.

La bande rétractable 1 est fixée par couture sur la face intérieure 2 de la veste de protection 3 au niveau des hanches. Elle est donc située en-dessous de la ligne 4 démarquant la taille de la personne. En effet, il a été constaté que dans cette position elle exerce un effet protecteur maximal contre la montée d'air chaud et des flammes.

Comme mentionné plus haut, l'existence d'une couche d'air entre la veste de protection et les vêtements portés en dessous de celle-ci (chemise, tee-shirt ou polo) et la possibilité de circulation de l'air entre ces vêtements et l'extérieur, ainsi que l'existence d'une couche d'air à l'intérieur même de la veste, au niveau de la barrière thermique, sont particulièrement importantes, participant à la protection des sapeurs-pompiers lors des interventions sur feu ; elles constituent également un facteur important de confort au porter, permettant le refroidissement du corps et l'évacuation de la sueur.

Une veste équipée de la bande rétractable 1 permet de bénéficier de cette circulation naturelle de l'air en situation normale. Lorsque le risque thermique se présente, c'est à dire lorsque l'air circulant atteint une température T, la bande 1 va réagir de façon ponctuelle et empêcher l'effet cheminée qui pourrait se créer. En effet, lorsqu'une personne qui est équipée de la veste décrite est soumise aux conditions extrêmes de chaleur et de feu, ladite veste va se resserrer sur son corps, grâce à la rétraction de ladite bande rétractable, ce serrage éliminant complètement le passage d'air pouvant induire l'apparition de l'effet cheminée.

Dans l'exemple illustré, la veste de protection d'intervention 3 des sapeurs-pompiers a une forme légèrement cintrée, avec des manches facilitant l'amplitude des mouvements, tout en préservant le recouvrement du pantalon. Elle présente une fermeture frontale 5 assurée par un système à rabats et d'ouverture rapide et ne présente pas d'ouverture au dos.

Dans la première variante de réalisation de l'invention qui est présentée sur la figure, la bande rétractable 1 est fixée sur la face intérieure 2 de la veste de protection 3. Dans ce cas, selon un mode de réalisation particulier, la bande rétractable 1 est solidaire de la doublure de finition constituant la couche la plus intérieure de la veste de protection 3. Ceci peut être réalisé :
- soit en cousant le ruban de tissu rétractable sous l'effet de la chaleur en continu sur ladite doublure de finition,
- soit en enduisant ladite doublure de finition d'une bande d'un matériau rétractable sous l'effet de la chaleur,
- soit en intégrant dans la fabrication de la doublure de finition un groupement de fils thermorétractables, faisant office de bande selon l'invention, par exemple des fils de trame.

Dans un autre mode de réalisation, non représenté, de cette première variante, la bande rétractable 1 est glissée à travers des passants qui sont fixés sur la face intérieure 2 de la veste de protection 3. Le nombre de passants doit être suffisant pour que le placage de ladite bande 1 soit sensiblement continu. Il est en fonction de la taille de la veste, par exemple un passant tous les dix centimètres.

Dans les cas ci-dessus, la bande rétractable 1 est solidaire à la doublure de finition de la veste de protection 3 et peut s'adapter à une veste de protection déjà confectionnée, moyennant quelques aménagements.

Il est à noter un avantage complémentaire du fait que la bande thermorétractable est solidaire de la doublure de finition. Lors du retrait conduisant au serrage du vêtement, il se produit un entraînement partiel de la doublure par rapport aux autres constituants du vêtement, ce qui crée une couche d'air à l'intérieur du vêtement et augment localement ses propriétés isolantes.

Dans une seconde variante de réalisation de l'invention, la bande rétractable 1 est fixée en interne dans la structure multicouches entrant dans la constitution de la veste de protection 3.

Quand la bande thermorétractable est constituée d'une pièce textile, le choix de la nature des fils ou fibres entrant dans la constitution de ladite pièce et la contexture de celle-ci est déterminé en fonction de la position de la bande 1 dans la structure multicouches. On choisit de préférence une nature de fil ou fibre présentant un retrait à une température assez élevée lorsque la bande est fixée en externe sur la face intérieure de la doublure de la veste de protection 3 (première variante), et une nature de fil ou fibre présentant un retrait à une température plus basse, lorsque la bande 1 est fixée en interne dans ladite structure multicouches (seconde variante).

Parmi les matériaux ininflammables présentant un retrait sous l'effet de la chaleur et présentent une bonne résistance mécanique à la chaleur, appropriés pour confectionner la bande rétractable 1, on peut utiliser des polymères de type méta-aramides. On peut citer à titre d'exemple le polymère commercialisé par la société KERMEL sous la dénomination de Kermel Tech, qui comporte des fibres de polyamides-imide, ou des fibres de polyimide pur T84, qui présentent un effet de rétraction aux températures proches de 280-300°C. Dans ce cas, la bande rétractable 1 peut être tissée, tricotée ou tressée à partir de fils ou fibres desdits polymères de type méta-aramide.

Dans la seconde variante de réalisation de la bande 1, on peut utiliser des matériaux qui rétractent à des températures plus basses, comme le polyester.

## Revendications

1. Veste de protection contre la chaleur et le feu **caractérisée par** une bande thermorétractable (1) à une température donnée et qui est agencée en sorte d'obtenir le serrage de la veste (3) autour du corps de son porteur du fait de la rétraction de la bande (1) à ladite température.

2. Veste selon la revendication 1, **caractérisée en ce que** la bande rétractable (1) est positionnée au niveau de la partie de la veste (3) couvrant les hanches.

3. Veste selon l'une quelconque des revendications 1 et 2, **caractérisée en ce que** la bande (1) est réalisée en matériau ininflammable.

4. Veste selon l'une quelconque des revendications 1 à 3 **caractérisée en ce que** la bande (1) est fixée sur la face intérieure (2) de la veste.

5. Veste selon l'une quelconque des revendications 1 à 3 et présentant une structure multicouches, **caractérisée en ce que** la bande (1) est fixée en interne dans ladite structure multicouches.

6. Veste selon la revendication 4 et présentant une structure multicouches comprenant au moins trois couches dont la couche la plus intérieure est une doublure de finition, **caractérisée en ce que** la bande (1) est solidaire de ladite doublure de finition.

7. Veste selon la revendication 6, **caractérisée en ce que** la bande (1) est cousue sur ou intégrée dans ladite doublure de finition.

8. Veste selon la revendication 6, **caractérisée en ce que** la bande (1) est enduite sur ladite doublure de finition.

9. Veste selon l'une quelconque des revendication 4 et 6, **caractérisée en ce que** la bande (1) est glissée à travers des passants fixés sur ladite face intérieure (2).

10. Veste selon l'une quelconque des revendications 4 et 6 à 9, **caractérisée en ce que** la bande (1) comprend des polymères de type méta-aramides.

11. Veste selon la revendication 5, **caractérisée en ce que** la bande (1) comprend un matériau de type polyester.

12. Bande destinée à équiper une veste de protection (3) contre la chaleur et le feu selon l'une quelconque des revendications 1 à 11, **caractérisée en ce qu'**elle présente un retrait sous l'effet de la chaleur d'au moins 15% à une température d'au moins 260°C.

13. Bande (1) selon la revendication 12, **caractérisée en ce qu'**elle est tissée, tricotée ou tressée à partir de fils ou de fibres de polymère de type méta-aramides.

## Claims

1. A protective jacket against heat and fire, **characterised by** a heat-retractable strip (1) at a given temperature and which is fitted such that the jacket (3) can be tightened around the body of its wearer as a result of retraction of the strip (1) at said temperature.

2. The jacket as claimed in Claim 1, **characterised in that** the retractable strip (1) is positioned at the level of the part of the jacket (3) covering the hips.

3. The jacket as claimed in any one of Claims 1 and 2, **characterised in that** the strip (1) is made of inflammable material.

4. The jacket as claimed in any one of Claims 1 to 3 **characterised in that** the strip (1) is fixed to the inner face (2) of the jacket.

5. The jacket as claimed in any one of Claims 1 to 3 and having a multilayer structure, **characterised in that** the strip (1) is fixed internally in said multilayer structure.

6. The jacket as claimed in Claim 4 and having a multilayer structure comprising at least three layers whereof the innermost layer is a finish lining, **characterised in that** the strip (1) is attached to said finish lining.

7. The jacket as claimed in Claim 6, **characterised in that** the strip (1) is stitched onto or integrated into said finish lining.

8. The jacket as claimed in Claim 6, **characterised in that** the strip (1) is coated onto said finish lining.

9. The jacket as claimed in any one of Claims 4 and 6, **characterised in that** the strip (1) is slid through loops fixed onto said inner face (2).

10. The jacket as claimed in any one of Claims 4 and 6 to 9, **characterised in that** the strip (1) comprises polymers of meta-aramide type.

11. The jacket as claimed in Claim 5, **characterised in that** the strip (1) comprises a material of polyester type.

12. A strip intended to equip a protective jacket (3) against heat and fire, as claimed in any one of Claims 1 to 11, **characterised in that** it shrinks under the effect of heat by at least 15% at a temperature of at least 260°C.

13. The strip (1) as claimed in Claim 12, **characterised in that** it is woven, knitted or braided from threads or fibres of polymer of meta-aramide type.

## Patentansprüche

1. Schutzjacke gegen Hitze und Feuer, **gekennzeichnet durch** ein Wärmeschrumpfband (1), welches bei einer vorgegebenen Temperatur schrumpft und angeordnet ist, um das Festziehen der Jacke (3) um den Körper ihres Trägers aufgrund des Zusammenziehens des Bandes (1) bei der vorgegebenen Temperatur zu verursachen.

2. Jacke nach Anspruch 1, **dadurch gekennzeichnet, daß** das Wärmeschrumpfband (1) auf der Höhe des Jackenteils (3), der die Hüften abdeckt, angeordnet ist.

3. Jacke nach einem der Ansprüche 1 oder 2, **dadurch gekennzeichnet, daß** das Band (1) aus einem feuerfesten Material besteht.

4. Jacke nach einem der vorgehenden Ansprüche, **dadurch gekennzeichnet, daß** das Band (1) auf der Innenseite (2) der Jacke befestigt ist.

5. Jacke nach einem der Ansprüche 1 bis 3 mit einer Mehrschichtstruktur, **dadurch gekennzeichnet, daß** das Band (1) im Inneren der Mehrschichtstruktur befestigt ist.

6. Jacke nach Anspruch 4 mit einer Mehrschichtstruktur, umfassend mindestens drei Schichten, wobei die innerste Schicht eine Futtereinlage ist, **dadurch gekennzeichnet, daß** das Band (1) mit der Futtereinlage verbunden ist.

7. Jacke nach Anspruch 6, **dadurch gekennzeichnet, daß** das Band (1) auf die Futtereinlage genäht oder in die Futtereinlage integriert ist.

8. Jacke nach Anspruch 6, **dadurch gekennzeichnet, daß** das Band (1) auf der Futtereinlage beschichtet ist.

9. Jacke nach einem der Ansprüche 4 oder 6, **dadurch gekennzeichnet, daß** das Band (1) durch Schlaufen, welche auf der Innenseite (2) befestigt sind, eingeschoben ist.

10. Jacke nach einem der Ansprüche 4 und 6 bis 9, **dadurch gekennzeichnet, daß** das Band (1) Polymere des Meta-Aramidtyps umfaßt.

11. Jacke nach Anspruch 5, **dadurch gekennzeichnet, daß** das Band (1) ein Material des Polyestertyps umfaßt.

12. Band zur Ausrüstung einer Schutzjacke (3) gegen Hitze und Feuer nach einem der Ansprüche 1 bis 11, **dadurch gekennzeichnet, daß** das Band unter Hitzeeinwirkung ein Schrumpfen von mindestens 15% bei einer Temperatur von mindestens 260°C aufweist.

13. Band (1) nach Anspruch 12, **dadurch gekennzeichnet, daß** das Band aus Polymer-Fäden oder Fasern des Meta-Aramidtyps gewebt, gewirkt oder geflochten ist.
